# FASCICULE DE BREVET EUROPEEN

(11) **EP 4 341 593 B1**
(45) Date de publication et mention de la délivrance du brevet: **08.04.2026**
(21) Numéro de dépôt: 22729642.3
(22) Date de dépôt: 19.05.2022
(51) Int. Cl.: F16L 11/08

(54) **CONDUITE FLEXIBLE SOUS-MARINE COMPRENANT UNE COUCHE ANTI-USURE À BASE DE POLYPROPYLÈNE HOMOPOLYMÈRE**
FLEXIBLES UNTERWASSERROHR MIT EINER VERSCHLEISSFESTEN POLYPROPYLENHOMOPOLYMERSCHICHT
FLEXIBLE UNDERWATER PIPE COMPRISING A WEAR-RESISTANT POLYPROPYLENE HOMOPOLYMER LAYER

(30) Priorité: 21.05.2021 FR 2105325
(43) Date de publication de la demande: 27.03.2024
(73) Titulaire: TechnipFMC Subsea France, 92400 Courbevoie (FR)
(72) Inventeur: DEMANZE, Frederic, 76490 CAUDEBEC EN CAUX (FR); MAURICE, Julien, 76480 DUCLAIR (FR)
(74) Mandataire: Lavoix
(86) Numéro de dépôt international: PCT/EP2022/063552
(87) Numéro de publication internationale: WO 2022/243424

(56) Documents cités:
- WO-A1-03/083344
- WO-A1-2013/135244
- WO-A1-2015/004597
- WO-A1-2018/149462

## Description

La présente invention concerne une conduite sous-marine destinée au transport de fluides, en particulier d'hydrocarbures.

La plupart des conduites flexibles utilisées dans l'industrie pétrolière offshore sont des conduites flexibles comportant généralement, de l'intérieur vers l'extérieur :
- éventuellement une carcasse métallique,
- une gaine polymérique interne d'étanchéité,
- au moins une couche de renforcement constituée d'un enroulement hélicoïdal d'un élément longitudinal métallique ou en matériau composite autour de la gaine interne d'étanchéité,
- une gaine polymérique externe d'étanchéité.

Typiquement, elles comprennent, de l'intérieur vers l'extérieur :
- éventuellement une carcasse métallique,
- une gaine polymérique interne d'étanchéité,
- éventuellement une voûte de pression,
- au moins une nappe d'armures de traction (généralement deux nappes d'armure de traction),
- une gaine polymérique externe d'étanchéité.

Dans tout ce qui suit, les termes « extérieur » ou « externe » et « intérieur » ou « interne » s'entendent respectivement comme plus éloigné radialement de l'axe de la conduite flexible et comme plus proche radialement de l'axe de la conduite flexible.

Ces conduites sont généralement de type non lié (« unbonded » en langue anglaise). Par « non lié », on entend que les couches sont libres de se déplacer l'une par rapport à l'autre. Typiquement, les couches adjacentes ne sont pas collées entre elles, soudées entre elles, et elles ne sont pas noyées (« embedded » en anglais) dans une gaine polymérique ou élastomérique.

De telles conduites flexibles sont notamment décrites dans le document normatif API 17J, « Specification for Unbonded Flexible Pipe », 4ème édition, mai 2014 publié par l'American Petroleum Institute. Elles sont utilisées notamment en eau profonde dans l'industrie pétrolière et gazière. Typiquement, elles sont utilisées pour le transport de fluides, en particulier d'hydrocarbures, ou encore pour la réinjection de dioxyde de carbone dans un réservoir sous-marin. Les conduites flexibles pétrolières s'étendent généralement à travers une étendue d'eau entre un ensemble de surface et un ensemble de fond. Ces conduites peuvent également s'étendre entre deux ensembles de surface ou entre deux ensembles de fond.

L'ensemble de fond est destiné à recueillir le fluide exploité dans le fond de l'étendue d'eau, à surveiller et contrôler son écoulement et à le distribuer vers l'ensemble de surface. L'ensemble de surface est généralement flottant. Il est destiné à collecter, potentiellement traiter, et à distribuer le fluide à terre. L'ensemble de surface peut être une plateforme semisubmersible, un FPSO ou un autre ensemble flottant.

Dans certains cas, pour l'exploitation de fluides en eaux profondes, la conduite flexible présente une longueur supérieure à 800 m, voire supérieure à 1000 m ou à 2000 m pour des applications en eaux ultra-profondes.

Pour les grandes profondeurs, la conduite flexible est dimensionnée pour résister à une pression hydrostatique très importante, typiquement de 50 à 1000 bar, par exemple 200 bar pour une conduite immergée à 2000 m de profondeur et à des températures élevées, supérieures à 130°C, voire 170°C, pendant de longues périodes de temps, c'est-à-dire plusieurs années, typiquement 20 ans.

De plus, la conduite flexible est généralement dimensionnée pour résister à une tension axiale supérieure au poids total de la conduite flexible suspendue à un ensemble de surface et s'étendant sous l'eau depuis la surface jusqu'au fond marin. Ceci est notamment le cas lorsque la conduite flexible est utilisée comme une conduite montante (« riser » en anglais) destinée à assurer en service une liaison verticale entre le fond marin et l'ensemble de surface. La capacité de la conduite flexible à supporter son propre poids lorsqu'elle est suspendue dans l'eau permet notamment de faciliter son installation en mer à partir d'un navire de pose.

Cependant, ces conduites flexibles ont généralement un poids élevé, ce qui rend leur installation en eau profonde et ultra-profonde complexe et coûteuse. De plus, les conduites montantes de ce type doivent généralement être équipées de bouées pour les applications à grande profondeur, ce qui induit des dépenses supplémentaires. Enfin, les couches métalliques de renfort sont généralement sensibles à la corrosion, notamment à la corrosion sous l'influence de gaz acides du type H₂S et CO₂ présents dans les hydrocarbures de certains gisements. Les couches de renfort en matériau composite sont parfois susceptibles de se dégrader en présence d'eau (hydrolyse notamment), cette dégradation pouvant être exacerbée par le H₂S.

Pour pallier à ces problèmes, des conduites flexibles allégées comportant une structure tubulaire de renfort en matériau composite comprenant une matrice thermoplastique et des fibres de renfort noyées dans la matrice ont été développées, à savoir les conduites flexibles dites « hybrides » (« hybrid flexible pipe » HFP en anglais).

Dans les conduites flexibles dites « hybrides », la carcasse métallique et la gaine polymérique interne d'étanchéité de la conduite flexible décrite ci-dessus sont remplacées par un tuyau composite thermoplastique (« Thermoplastic Composite Pipe » (TCP)), tel que décrit dans le document normatif DNVGL-ST-F119 « Thermoplastic Composite Pipe », édition de Septembre 2019 publié par le Det Norsk Veritas . Les conduites flexibles dites « hybrides » comportent, de l'intérieur vers l'extérieur :
- une gaine polymérique interne tubulaire,
- une structure tubulaire de renfort réalisée à partir d'un enroulement de plusieurs bandes en matériau composite, cette couche intermédiaire étant liée à la gaine polymérique interne tubulaire,
- une gaine polymérique d'étanchéité,
- au moins une couche de renfort renforcement constituée d'un enroulement hélicoïdal d'un élément longitudinal métallique ou en matériau composite autour de la gaine polymérique d'étanchéité,
- une gaine polymérique externe d'étanchéité.

Par « lié », on entend que la structure tubulaire de renfort et la gaine polymérique interne tubulaire ne sont pas libres de se déplacer l'une par rapport à l'autre. Elles peuvent être liées par collage (par l'intermédiaire d'une colle ou d'un adhésif) ou par soudage.

La structure tubulaire de renfort reprend généralement l'essentiel des efforts radiaux appliqués à la conduite flexible hybride. La structure tubulaire de renfort, liée à la gaine polymérique interne tubulaire d'étanchéité, présente en outre une fonction de barrière aux gaz, tels que les gaz acides du type H₂S et CO₂ contenus dans les hydrocarbures transportés à l'intérieur de la gaine polymérique interne tubulaire. Elle permet ainsi de protéger les éléments métalliques de renfort de la conduite flexible contre les phénomènes de corrosion, et/ou les matériaux composites d'une dégradation par hydrolyse.

La ou les couches de renfort constituées de fils métalliques ou en matériau composite sont similaires à celle des conduites flexibles de type non lié, c'est-à-dire qu'elles sont constituées de fils ou de bandes enroulés hélicoïdalement, généralement selon un pas long. Elles ne sont généralement pas liées aux couches adjacentes. Il s'agit généralement de nappes d'armure de traction.

En outre, optionnellement, ces conduites flexibles hybrides peuvent comporter une carcasse interne située à l'intérieur de la gaine polymérique interne tubulaire, ladite carcasse interne ayant pour fonction d'augmenter la résistance à l'écrasement (« collapse » en anglais) de la conduite. La carcasse interne est formée par exemple d'un feuillard métallique profilé, enroulé en spirale. Les spires du feuillard sont avantageusement agrafées les unes aux autres, ce qui permet de reprendre les efforts d'écrasement.

Ces conduites flexibles hybrides sont notamment décrites dans l'article « Unbonded Flexible Pipe : Composite Reinforcement for Optimized Hybrid Design » écrit par N. Dodds, V. Jha, J. Latto et D. Finch, et publié sous la référence OTC-25753 lors de la conférence « Offshore Technology Conference » qui s'est tenue à Houston du 4 au 7 mai 2015, ou dans les demandes GB 2 504 065 et WO 2018/091693. Ces deux demandes décrivent des conduites flexibles hybrides dans lesquelles la structure tubulaire de renfort est réalisée à partir d'un enroulement de plusieurs bandes comprenant une matrice polymérique et dans laquelle sont noyées des fibres de renfort.

Que la conduite flexible soit une conduite « usuelle » de type non liée ou soit une conduite flexible hybride, les différentes couches non liées sont, dans une certaine limite, mobiles les unes par rapport aux autres, de manière à permettre à la conduite flexible de fléchir. Lorsque la conduite comprend plusieurs couches de renforcement métallique ou en matériau composite adjacentes, cette mobilité induit une friction entre elles et les couches adjacentes, et conduit à terme à leur usure prématurée.

Aussi, afin d'éviter qu'au moins deux de ces couches de renforcement métallique ou en matériau composite ne soient directement en contact l'une contre l'autre, ce qui provoquerait leur usure, une couche intermédiaire en matériau polymérique, appelée « couche anti-usure » ("anti-wear layer " en langue anglaise), peut être interposée.

Cette couche intermédiaire anti-usure peut toutefois se détériorer rapidement, lorsque la conduite flexible subit des contraintes sévères, telles que celles rencontrées pour l'exploitation de certains gisements pétroliers sous-marins, située à grande profondeur, et où l'hydrocarbure est à une température élevée supérieure à 130°C, et/ou dans le cas de conditions dynamiques (variations de courbures du flexible) sévères. Dans de telles conditions, cette couche intermédiaire anti-usure peut endurer des températures voisines de 110 °C et des pressions de contact de l'ordre de 300 à 400 bars. Une des détériorations les plus usuelles est une perte d'épaisseur de la couche anti-usure par fluage, qui peut limiter, voire même anéantir, la protection conférée par la couche anti-usure aux couches de renforcement adjacentes.

La demande WO 2006/120320 décrit une conduite flexible pour le transport d'hydrocarbures comprenant un couche anti-usure en polymère amorphe, de préférence en polysulfone (PSU), polyéthersulfone (PES), polyphénylsulfone (PPSU) ou en polyétherimide (PEI).

L'utilisation des matériaux thermoplastiques au sein des conduites flexibles non liées est résumée dans les documents normatifs API RP 17B (2014) et API 17J (2014) publiés par l'American Petroleum Institute.

La littérature rapporte l'utilisation de polypropylène comme matériau polymérique de couches polymériques d'une conduite flexible.

Par exemple, la demande WO 2017/174660 décrit une conduite sous-marine destinée au transport d'hydrocarbures comprenant une couche de renforcement métallique autour d'une gaine polymérique interne d'étanchéité susceptible d'être en contact avec les hydrocarbures et comprenant un polypropylène homopolymère de densité et d'indice de fluidité spécifiques. Toutefois, la gaine polymérique interne d'étanchéité n'est pas une couche anti-usure (et inversement). Une couche anti-usure n'entre pas en contact avec les hydrocarbures lorsque la conduite est mise en service.

La demande WO 2017/076412 décrit une conduite sous-marine destinée au transport d'hydrocarbures comprenant une couche polymérique comprenant au moins 50% en poids d'un polypropylène et au moins 1% en poids d'un plastomère formé à partir d'un propylène et au moins un comonomère autre que le propylène. Cette demande ne suggère toutefois ni un polypropylène homopolymère ayant le module de flexion et l'indice de fluidité définis ci-dessous pour celui utilisé dans la présente invention, ni le comportement au fluage amélioré rendant son utilisation avantageuse comme couche anti-usure. En outre, la présence du plastomère est requise afin de conférer à la couche la résistance et la flexibilité requises, et ce dans des proportions non négligeables. Un tel plastomère augmente considérablement le prix de revient de la couche.

La demande WO 2015/004597 décrit une conduite flexible pour le transport d'hydrocarbure comprenant une carcasse, une gaine polymérique interne, une couche polymérique externe protectrice, une nappe d'armure mécanique comprenant une armure résistante à la pression et une nappe d'armure, la nappe d'armure mécanique comprenant une pluralité d'éléments allongés en acier au carbone recouverts d'un gainage en aluminium. Entre l'armure résistante à la pression et la nappe d'armure, la conduite peut comprendre une couche, de préférence en polyamide ou en polypropylène. De plus, la nappe d'armure comprend de préférence une première nappe d'armure et une deuxième nappe d'armure et entre ces deux nappes d'armures peut être localisée une couche polymérique de préférence en polyamide ou en polypropylène.

La demande WO 2018/149462 décrit un assemblage d'un embout d'extrémité et d'une conduite flexible de type non lié. Cette dernière comprend une carcasse, une gaine de pression interne, une voûte de pression, éventuellement une couche intermédiaire d'isolation thermique et/ou électrique, au moins une nappe d'armure et éventuellement une gaine externe. La couche intermédiaire d'isolation thermique et/ou électrique peut être en divers polymères, notamment en polypropylène. Elle peut en outre comprendre une couche anti-usure, de préférence en polyéthylène, polyamide, polyaramide, polyuréthane, polypropylène ou PVDF.

Un des objectifs de la présente invention est de fournir une conduite sous-marine pour le transport de fluide, de préférence d'hydrocarbures, dont la couche anti-usure est moins coûteuse et qui présente une résistance au fluage telle que la couche anti-usure ralentisse, de préférence empêche l'usure des couches de renforcement métalliques ou en matériau composite qui l'entourent, et ce sur toute la durée de vie de la conduite, typiquement 20 ans.

A cet effet, selon un premier objet, l'invention concerne une conduite flexible sous-marine pour le transport de fluide selon la revendication 1, de préférence d'hydrocarbures, comprenant au moins deux couches de renforcement séparées par une couche anti-usure en matériau polymérique, chacune desdites couches de renforcement étant réalisée par enroulement hélicoïdal d'un élément longitudinal métallique ou en matériau composite, ladite couche anti-usure étant réalisée par enroulement hélicoïdal d'au moins une bande dudit matériau polymérique, le matériau polymérique comprenant un polypropylène homopolymère ayant:
- un module de flexion mesuré à 23°C selon la norme ISO 178 de 2019 supérieur à 1500 MPa, et
- un indice de fluidité (« melt flow index » MI ou MFI en anglais) mesuré selon ISO 1133 révisée en 2011 à 230°C sous une masse de 2,16 kg inférieur ou égal à 4,0 g/10 minutes.

L'invention repose sur la découverte qu'un tel polypropylène homopolymère présente une résistance au fluage qui permet que la couche anti-usure formée à partir d'une bande qui le contient maintienne une épaisseur suffisante pour que les couches de renforcement qui l'entourent ne rentrent pas en contact, et donc ne s'usent pas l'une contre l'autre. L'utilisation d'un tel polypropylène homopolymère permet d'amoindrir la perte d'épaisseur de la couche anti-usure, ce qui est avantageux car plus l'épaisseur de la couche anti-usure est maintenue, mieux elle protège les couches de renforcements qui l'entourent.

De plus, un tel polypropylène homopolymère résiste aux conditions de pression et de température mentionnées ci-dessus. De plus, il présente une résistance chimique compatible avec son utilisation comme matériau polymérique d'une couche d'une conduite flexible pour le transport d'hydrocarbures. L'espace annulaire (espace entre la gaine polymérique interne et la gaine polymérique externe d'étanchéité de la conduite) dans lequel se situe la couche anti-usure comprend des gaz et/ou des acides (CO₂ et H₂S en particulier). Avantageusement, le polypropylène homopolymère n'est pas sensible à l'hydrolyse, à la différence d'une couche anti-usure à base de polyamide. En outre, le polypropylène homopolymère est peu, voire pas, sensible à la plastification induite par le CO₂.

Un autre des avantages d'une telle couche anti-usure est que le polypropylène homopolymère présente une bonne perméabilité au CO₂ et à H₂S, ce qui permet de diminuer la concentration en CO₂ et à H₂S dans les couches plus internes à la couche anti-usure, et donc de diminuer la corrosion (en particulier pour les couches métalliques) et/ou la dégradation à l'hydrolyse (en particulier pour les couches polymériques ou en matériau composite) de ces couches plus internes.

Un autre des avantages d'une telle couche anti-usure est son faible coût.

Le matériau polymérique de la bande enroulée de façon hélicoïdale pour former la couche anti-usure de la conduite comprend un polypropylène homopolymère ou un mélange de polypropylènes homopolymères.

Il existe trois grandes classes de polypropylène, à savoir, les homopolymères (PPH), les copolymères bloc (également appelés « impact copolymer ») (PPB) et les copolymères statistiques (PPR) (désignations selon les normes ISO 15013 révisée en 2015 et ISO 1873-2 révisée en 2011). Typiquement les PPH sont constitués d'au moins 97%, notamment d'au moins 98%, typiquement d'au moins 99%, de préférence d'au moins 99,8% et avantageusement exclusivement d'un enchainement d'unités de propylène par rapport au nombre total d'unités. La proportion d'unités de propylène peut notamment être déterminée par spectroscopie infrarouge à transformée de Fourier.

Le polypropylène homopolymère du matériau polymérique de la bande a un module de flexion mesuré à 23°C selon la norme ISO 178 de 2019 à un taux de déformation en flexion de 1%.min⁻¹ supérieur à 1500 MPa, notamment supérieur ou égal à 1550 MPa, de préférence supérieur ou égal à 1600 MPa, de manière particulièrement préférée supérieur ou égal à 1700 MPa. Le module de flexion est généralement inférieur à 2500 MPa, notamment inférieur à 2300 MPa de préférence inférieur à 2100 MPa. Ces modules de flexion sont particulièrement adaptés pour que la couche anti-usure ait la résistance au fluage requise afin de permettre de diminuer la réduction de son épaisseur.

Le polypropylène homopolymère du matériau polymérique de la bande a un indice de fluidité mesuré selon ISO 1133 révisée en 2011 à 230°C sous une masse de 2,16 kg inférieur ou égal à 4,0 g/10 minutes. L'indice de fluidité est généralement supérieur à 0,1 g/10 minutes, notamment supérieur à 0,3 g/10 minutes, de préférence supérieur ou égal à 2,0 g/10 minutes. De tels indices de fluidité facilitent en effet la préparation d'une bande par extrusion. L'utilisation de polypropylène homopolymère d'indice de fluidité plus élevé conduit généralement à des bandes dont l'épaisseur n'est pas suffisamment homogène, ce qui nuit à l'homogénéité de l'épaisseur de la couche anti-usure obtenue et donc à ses performances.

Lorsque le matériau polymérique comprend un mélange de polypropylènes homopolymères, il n'est pas obligatoire que chaque polypropylène homopolymère qu'elle contient ait un module de flexion et un indice de fluidité tels que définis ci-dessus. Il suffit en effet que le mélange ait ces propriétés. Dans un mode de réalisation particulier, chaque polypropylène homopolymère du mélange de polypropylènes homopolymères a un module de flexion et un indice de fluidité tels que définis dans la présente demande.

Le polypropylène homopolymère du matériau polymérique de la bande (ou le mélange de polypropylènes homopolymères, voire chaque polypropylène homopolymère du mélange de polypropylènes homopolymères) a généralement :
- une densité selon ISO 1183 de 2019 supérieure ou égale à 0,85 g/cm³, typiquement ou égale à 0,88 g/cm³, notamment ou égale à 0,905 g/cm³,
- une contrainte de traction au seuil (« tensile yield stress » en anglais) mesurée à 23 ± 2 °C et avec une vitesse de déplacement de 50 mm/min selon ASTM D638 type IV de 2014 ou ISO 527-2 de 2012 comprise entre 30 et 45 MPa, et/ou
- un allongement au seuil (mesurée à 23 ± 2 °C et avec une vitesse de déplacement de 50 mm/min selon ASTM D638 de 2014 ou ISO 527-2 de 2012) de 1 à 7%, de préférence de 3 à 5%.

Le polypropylène homopolymère du matériau polymérique de la bande (ou chaque polypropylène homopolymère du mélange de polypropylènes homopolymères) a généralement une température de fusion (en considérant le pic correspondant à la température de fusion la plus haute en calorimétrie à balayage différentiel (« Differential scanning calorimetry » (DSC) en anglais) selon ISO 11357-3 de 2018) au moins égale à 150°C, notamment au moins égale à 200°C, de préférence au moins égale à 220°C. Généralement, il y a une coexistence des morphologies cristalline de type alpha et béta dans le polypropylène homopolymère, ce qui peut conduite à deux pics de fusion distincts en DSC. Dans ce cas, le pic correspondant à la température de fusion la plus haute est pris en considération dans le cadre de la demande.

Le polypropylène homopolymère (ou le mélange de polypropylènes homopolymères, voire chaque polypropylène homopolymère du mélange de polypropylènes homopolymères) a généralement un taux de cristallinité d'au moins 40%, typiquement d'au moins 50%. Le taux de cristallinité peut être calculé en divisant la chaleur de fusion du polypropylène homopolymère déterminée par calorimétrie à balayage différentiel par la chaleur de fusion d'un polypropylène homopolymère à 100% cristallin, généralement estimée à 207 joules/grammes.

De tels densité, contrainte de traction au seuil, allongement au seuil, température de fusion et taux de cristallinité participent à ce que l'homopolymère de polypropylène présente une résistance au fluage améliorée et compatible avec l'utilisation de la bande du matériau polymérique comprenant le polypropylène homopolymère comme couche anti-usure entre deux couches de renforcements métalliques ou en matériau composite dans une conduite pour le transport de fluides, de préférence d'hydrocarbures.

A titre d'exemple de polypropylène homopolymère présentant ces propriétés, on peut citer les polypropylènes homopolymères suivants : Repsol PP040C1E, Polychim HL10XF, LyondellBasell Moplen HP740J, Braskem Inspire 234, Total PPH4022 et Braskem H605.

Le polypropylène homopolymère de la bande (ou un des, voire chaque, polypropylène homopolymère du mélange de polypropylènes homopolymères) peut être réticulé.

Le polypropylène homopolymère de la bande (ou un des, voire chaque, polypropylène homopolymère du mélange de polypropylènes homopolymères) peut être non réticulé.

Des modes de réalisation sont décrits ci-après pour la bande et le matériau polymérique. Ils s'appliquent pour au moins une bande, de préférence pour chaque bande, lorsque la couche anti-usure comprend plusieurs bandes.

La bande comprenant le polypropylène homopolymère défini ci-dessus comprend typiquement :
- une matrice polymérique, et
- éventuellement des composants dispersés de façon discontinue dans la matrice polymérique.

Par « matrice polymérique », on entend la phase continue polymérique qui forme la bande. La matrice polymérique est une matrice continue. Le matériau polymérique de la bande peut éventuellement comprendre des composants dispersés de façon discontinue dans la matrice polymérique, mais qui ne font pas partie de la matrice polymérique. De tels composants peuvent par exemple être des charges telles que des fibres.

La matrice polymérique du matériau polymérique de la bande est généralement obtenue par extrusion d'un ou de plusieurs polymères (qui formeront la matrice polymérique) et éventuellement d'additifs (mélange maître). Lors de l'extrusion, certains additifs sont incorporés dans la matrice polymérique, alors que d'autres ne se mélangent pas avec les polymères formant la matrice polymérique et se dispersent de façon discontinue dans la matrice polymérique, pour former des composants dispersés de façon discontinue dans la matrice polymérique.

Selon une première alternative, le matériau polymérique de la bande a une matrice polymérique qui comprend un polypropylène homopolymère tel que défini ci-dessus.

Selon cette alternative, le matériau polymérique de la bande dont la matrice polymérique comprend le polypropylène homopolymère est généralement obtenu par extrusion d'un ou de plusieurs polymères (qui formera(ont) la matrice polymérique), au moins l'un d'eux étant le polypropylène homopolymère défini ci-dessus, et éventuellement en présence d'additifs.

Les composants dispersés de façon discontinue dans la matrice polymérique peuvent éventuellement comprendre des polymères, par exemple un polypropylène homopolymère tel que défini ci-dessus. Cela étant, une conduite :
- dont le matériau polymérique de la bande de la couche anti-usure comprend un composant dispersé de façon discontinue dans la matrice polymérique (notamment des charges telles que des fibres) comprenant ou constituée d'un polypropylène homopolymère tel que défini ci-dessus,
- mais dont la matrice polymérique est exempte de polypropylène homopolymère tel que défini ci-dessus,
ne répond pas à la définition d'une conduite comprenant une couche anti-usure réalisée par enroulement hélicoïdal d'au moins une bande en matériau polymérique dont la matrice polymérique comprend un polypropylène homopolymère tel que défini ci-dessus, telle que définie dans cette première alternative.

Selon une deuxième alternative, le matériau polymérique de la bande comprend un composant dispersé de façon discontinue dans la matrice polymérique, ledit composant comprenant un polypropylène homopolymère tel que défini ci-dessus.

Selon cette deuxième alternative, un composant dispersé de façon discontinue dans la matrice polymérique du matériau polymérique de la bande comprend un polypropylène homopolymère tel que défini ci-dessus. Le composant peut être une charge telle qu'une fibre. Le composant comprenant un polypropylène homopolymère tel que défini ci-dessus est généralement un des additifs du mélange maître utilisé lors de l'extrusion. Selon cette deuxième alternative, la matrice polymérique du matériau polymérique de la bande peut être exempte de polypropylène homopolymère tel que défini ci-dessus.

Selon une troisième alternative, le matériau polymérique de la bande comprend un composant dispersé de façon discontinue dans la matrice polymérique, ledit composant comprenant un polypropylène homopolymère tel que défini ci-dessus et sa matrice polymérique comprend un polypropylène homopolymère tel que défini ci-dessus.

Selon cette troisième alternative, le polypropylène homopolymère tel que défini ci-dessus est donc présent à la fois dans la matrice polymérique et dans un composant dispersé de façon discontinue dans la matrice polymérique.

Le matériau polymérique de chaque bande comprend au moins 50% en poids, notamment au moins 65% en poids, de préférence au moins 75% en poids, typiquement au moins 85% en poids, par exemple au moins 90% en poids, de manière particulièrement préférée au moins 95% en poids de polypropylène homopolymère tel que défini ci-dessus par rapport au poids de la bande. Avantageusement, les propriétés du polypropylène homopolymère tel que défini ci-dessus permettent de n'utiliser que peu, voire pas de modifiant.

La bande peut comprendre un plastifiant, qui permet d'améliorer les performances de la couche anti-usure à froid (grâce à l'abaissement de la température de transition vitreuse de 10°C, voire de 25°C, mesurable par analyse mécanique dynamique (AMD) (en anglais : dynamic mechanical analysis, DMA)). Le plastifiant peut par exemple être choisi parmi les composés défini dans l'ouvrage *Handbook of Plasticizers* édité par Georges Wypych. Le plastifiant peut par exemple être choisi parmi les hydrocarbones saturés liquides (tel que le Primol 542 d'ExxonMobil), le tallate d'isooctyle monoester (tel que le PLASTHALL^{®} 100 de Hallstar Industrial), le sébacate de dioctyle, l'huile de paraffine ou un mélange de ceux-ci.

Par exemple, le matériau polymérique de la bande comprend de 0% à 5% en poids de plastifiant.

Le matériau polymérique de la bande peut également comprendre un modifiant choc, qui permet d'améliorer son comportement à froid, en particulier sa résistance à la fragilité à froid. Ainsi, le matériau polymérique de la bande peut comprendre de 0 à 5% en poids, par rapport au poids total de la bande, d'un modifiant choc, généralement un polymère présentant un module de flexion inférieur à 100 MPa mesuré selon la norme ISO 178 de 2019. Le modifiant choc est, de préférence, constitué d'une ou plusieurs polyoléfines. Par exemple, la polyoléfine est choisie parmi : un copolymère d'éthylène et de propylène à caractère élastomère (EPR), un copolymère éthylène-butène (EBR), un copolymère ethylène-octène (EOR), un copolymère éthylène-propylène-diène à caractère élastomère (EPDM), un copolymère styrène-butadiène (SBR) et un copolymère éthylène/(méth)acrylate d'alkyle, de préférence choisie parmi un copolymère éthylène-butène (EBR), un copolymère ethylène-octène (EOR), un copolymère styrène-butadiène (SBR) et un copolymère éthylène/(méth)acrylate d'alkyle.

De préférence, le matériau polymérique de la bande comprend moins de 0,4%, notamment moins de 0,1% par rapport au poids de la bande, voire même est exempt, de plastomère formé à partir d'un propylène et d'au moins un comonomère autre que le propylène. Outre le polypropylène homopolymère (ou le mélange de polypropylènes homopolymères), le matériau polymérique de la bande comprend moins de 0,4%, notamment moins de 0,1% par rapport au poids de la bande, voire même est exempt, de copolymère de polypropylène et d'un ou plusieurs autres monomères. Un copolymère de polypropylène contient généralement moins de 95%, typiquement moins de 90% d'unités de propylène par rapport au nombre total d'unités dans le copolymère de polypropylène. La proportion d'unités de propylène peut notamment être déterminée par spectroscopie infrarouge à transformée de Fourier.

Le matériau polymérique de la bande peut comprendre moins de 10%, notamment moins de 5% par rapport au poids de la bande, voire même être exempt de polyoléfine autre que le polypropylène homopolymère (ou le mélange de polypropylènes homopolymères). Il peut comprendre moins de 10%, notamment moins de 5% par rapport au poids de la bande, voire même être exempte de polymère autre que le polypropylène homopolymère (ou le mélange de polypropylènes homopolymères).

Le matériau polymérique de la bande peut comprendre un ou plusieurs autres additifs, notamment choisis parmi les antioxydants, anti-UV, charges de renfort, adjuvants de fabrication, stabilisants à la chaleur (par exemple un stabilisant de la gamme BRUGGOLEN^{®} H de Brüggemann), agents de nucléation et un mélange de ceux-ci, de préférence choisis parmi les antioxydants, agents de nucléation et un mélange de ceux-ci. Ainsi, le matériau polymérique de la bande peut comprendre de 0 à 10% en poids, de préférence de 0 à 5% en poids d'additif ou de mélange de ceux-ci par rapport au poids total de la bande.

Typiquement, le matériau polymérique de la bande comprend, voire est constituée de :
- 80 à 100% en poids, de préférence de 90 à 100% en poids, de polypropylène homopolymère tel que défini ci-dessus ou de mélange de ceux-ci,
- 0 à 5% en poids de plastifiant,
- 0 à 5% en poids de modifiant choc,
- 0 à 10% en poids d'additifs.

La bande peut être multicouches, par exemple bi- ou tri-couches. De préférence, la bande est monocouche.

En général, la bande a une section de forme rectangulaire, ou proche de celle-ci. De préférence, la bande a une épaisseur de 0,1 à 5,0 mm, de préférence de 0,5 à 3,0 mm et/ou une largeur de 30 à 200 mm, de préférence de 40 à 150 mm. La longueur de la bande est variable et peut atteindre 5 km de long.

La conduite comprend au moins deux couches de renforcement, chacune étant réalisée par enroulement hélicoïdal d'un élément longitudinal métallique ou en matériau composite. La couche anti-usure est entourée par ces deux couches de renforcement. Elle peut être adjacente ou non adjacente à celles-ci.

Généralement, chacune de ces deux couches de renforcement est réalisée par enroulement hélicoïdal d'un élément longitudinal à pas long. Dans la présente demande, la notion d'enroulement à pas court désigne tout enroulement hélicoïdal selon un angle d'hélice proche de 90°, typiquement compris entre 75° et 90°. La notion d'enroulement à pas long recouvre quant à elle les angles d'hélice inférieurs à 60°, typiquement compris entre 20° et 60° pour les couches de renforcement.

Généralement, chacune de ces deux couches de renforcement est non liée aux couches polymériques adjacentes. Par « non lié », on entend que les couches de renforcement sont libres de se déplacer par rapport aux couches polymériques adjacentes (en particulier par rapport à la couche d'usure). Typiquement, les couches de renforcement de la conduite flexible ne sont pas noyées (« embedded » en anglais) dans une gaine polymérique ou élastomérique (en particulier dans la couche d'usure). De même, il n'y a de préférence pas d'adhésif entre les couches de renforcement et la(les) couche(s) polymérique(s) adjacente(s) (en particulier la couche d'usure).

Selon une première alternative, la conduite flexible comprend une gaine polymérique interne d'étanchéité, au sein de laquelle circule le fluide à transporter. Celle-ci peut être en polyamide, en PVDF, en polyéthylène, notamment en polyéthylène à haut poids moléculaire ou en polyéthylène à résistance accrue, ou en polypropylène, notamment en polypropylène homopolymère ou en copolymère de polypropylène. La gaine polymérique interne d'étanchéité de la conduite flexible est typiquement tubulaire. Elle a généralement un diamètre de 50 mm à 600 mm, de préférence de 50 à 400 mm, et/ou une épaisseur de 1 mm à 150 mm, préférentiellement de 4 à 15 mm et/ou une longueur de 1 m à 10 km.

La conduite peut en outre comprendre une carcasse métallique. Si la conduite comprend une carcasse métallique, elle est dite à passage non lisse ("rough-bore" en langue anglaise). Si la conduite est exempte de carcasse métallique, elle est dite à passage lisse ("smooth-bore" en langue anglaise).

La fonction principale de la carcasse métallique est de reprendre les efforts radiaux dirigés de l'extérieur vers l'intérieur de la conduite afin d'éviter l'effondrement (« collapse » en langue anglaise) de tout ou partie de la conduite sous l'effet de ces efforts. Ces efforts sont notamment liés à pression hydrostatique exercée par l'eau de mer lorsque la conduite flexible est immergée. Ainsi, la pression hydrostatique peut atteindre un niveau très élevé lorsque la conduite est immergée à grande profondeur, par exemple 200 bar lorsque la conduite est immergée à une profondeur de 2000 m si bien qu'il est alors souvent indispensable d'équiper la conduite flexible d'une carcasse métallique.

Lorsque la conduite flexible comprend une gaine polymérique externe, la carcasse métallique a aussi pour fonction d'empêcher l'effondrement de la gaine polymérique interne d'étanchéité lors d'une décompression rapide d'une conduite flexible ayant transporté des hydrocarbures. En effet, les gaz contenus dans les hydrocarbures diffusent lentement à travers la gaine polymérique interne d'étanchéité et se retrouvent en partie piégés dans l'espace annulaire compris entre la gaine polymérique interne d'étanchéité et la gaine polymérique externe. Par suite, lors d'un arrêt de production engendrant une décompression rapide de l'intérieur de la conduite flexible, la pression régnant dans cet espace annulaire peut temporairement devenir nettement supérieure à la pression régnant à l'intérieur de la conduite, ce qui en l'absence de carcasse métallique conduirait à l'effondrement de la gaine polymérique interne d'étanchéité.

Par suite, généralement, pour le transport d'hydrocarbures, une conduite comportant une carcasse métallique est préférée, alors qu'une conduite exempte de carcasse métallique sera adaptée pour le transport d'eau et/ou de vapeur d'eau sous pression. En outre, lorsque la conduite est destinée à la fois à transporter des hydrocarbures et à être immergée à grande profondeur, alors la carcasse métallique devient indispensable dans la plupart des applications.

La carcasse métallique est constituée d'éléments longitudinaux enroulés hélicoïdalement à pas court. Ces éléments longitudinaux sont des feuillards ou des fils métalliques profilés (généralement en acier inoxydable) agencés en spires agrafées les unes aux autres. Généralement, la carcasse métallique est réalisée en profilant un feuillard en forme de S puis en l'enroulant en hélice de façon à agrafer entre elles les spires adjacentes.

La carcasse métallique est généralement revêtue de la gaine polymérique interne d'étanchéité. La carcasse métallique n'étant pas adjacente à une autre couche de renforcement, elle ne subit pas d'usure par frottement et n'est donc de préférence pas revêtue de couche anti-usure.

Au moins l'une des couches de renforcement de la conduite est généralement une nappe d'armures de traction. Les nappes d'armures de traction ont pour fonction principale de reprendre les efforts axiaux liés d'une part à la pression interne régnant à l'intérieur de la conduite flexible et d'autre part au poids de la conduite flexible notamment lorsqu'elle est suspendue. Lorsque la conduite est exempte de voûte de pression (par exemple dans le cas d'un ligne flexibles de type OOL (« Oil Offloading Line » en langue anglaise), la nappe d'armure permet de reprendre à la fois les efforts axiaux et radiaux. Les nappes d'armures de traction sont situées vers l'extérieur de la conduite. Les nappes d'armures de traction sont obtenues par enroulement à pas long de fils métalliques, de section généralement sensiblement rectangulaire, mais parfois de section de géométrie circulaire, ou complexe, du type par exemple T autoagrafé. Elles peuvent alternativement être obtenues par enroulement à pas long d'un élément longitudinal en matériau composite, par exemple comme décrit dans la demande FR 2 776 358. Ce matériau composite comprend typiquement une matrice polymérique renforcée avec des fibres de carbone, des fibres de verre, des fibres d'aramide, des fibres métalliques ou encore des fibres minérales (par exemple en basalte).

Généralement, la conduite comprend deux nappes d'armures de traction, typiquement deux : une interne (celle la plus au centre de la conduite) et une externe (celle la plus vers l'extérieur de la conduite), et leurs éléments longitudinaux étant enroulés par enroulements hélicoïdaux en sens opposé. La conduite peut comprendre plus de deux nappes d'armures de traction, les éléments longitudinaux de deux nappes d'armures de traction qui se succèdent étant enroulés par enroulements hélicoïdaux en sens opposé.

Une des couches de renforcement peut être une voûte de pression. Celle-ci est destinée à reprendre les efforts radiaux liés à la pression interne et dirigés de l'intérieur vers l'extérieur de la conduite, afin d'éviter l'éclatement de la gaine polymérique interne sous l'effet de la pression régnant à l'intérieur de la conduite. Usuellement, la voûte de pression est située vers l'intérieur de la conduite. C'est une couche plus interne que la(es) nappe(s) d'armures de traction. La voûte de pression est constituée d'éléments longitudinaux enroulés à pas court, par exemple des fils métalliques de forme Z (zêta), C, T (téta), U, K, X ou I, et/ou d'au moins une bande en aramide à résistance mécanique élevée (Technora^{®} ou Kevlar^{®}), et/ou d'au moins une bande composite comprenant une matrice thermoplastique dans laquelle sont noyées des fibres de renfort, par exemple des fibres de carbone ou des fibres de verre.

La présence de la voûte de pression n'est pas indispensable, en particulier lorsque les angles d'hélice des fils constituant les nappes d'armures de traction sont proches de 55°. En effet, cet angle d'hélice particulier confère aux nappes d'armures de traction la capacité de reprendre, en plus des efforts axiaux, les efforts radiaux exercés sur la conduite flexibles et dirigés de l'intérieur vers l'extérieur de la conduite. De manière préférée et notamment pour les applications en grande profondeur, la conduite flexible comprend une voûte de pression.

La conduite flexible comprend généralement une gaine polymérique externe d'étanchéité pour empêcher l'eau de mer de pénétrer au sein de la conduite flexible. Cela permet notamment de protéger les nappes d'armures de traction de l'eau de mer et donc de prévenir le phénomène de corrosion par l'eau de mer. La gaine polymérique externe d'étanchéité est avantageusement réalisée en matériau polymère, notamment à base d'une polyoléfine, telle que du polyéthylène, à base d'un polyamide, tel que du PA11 ou du PA12, à base d'un polymère fluoré tel que du polyfluorure de vinylidène (PVDF), ou à base d'un thermoplastique élastomère comprenant une polyoléfine, telle que le polyéthylène ou le polypropylène, associée à un élastomère du type SBS (styrène butadiène styrène), SEBS (styrène éthylène butadiène styrène), EPDM (éthylène propylène diène monomère), polybutadiène, polyisoprène ou polyéthylène-butylène.

La conduite flexible peut comprendre, en tant que couche de renforcement, un ruban de renfort entre la gaine polymérique externe d'étanchéité et la nappe d'armures (la nappe la plus externe quand il y a plusieurs nappes d'armures). Ce ruban de renfort est formé par exemple d'une couche anti-flambement de résistance mécanique élevée afin de limiter le flambement de la(des) nappe(s) d'armures de traction dans l'éventualité où la conduite serait soumise au phénomène d'effet de fond inverse. Cette couche anti-flambement est par exemple en aramide. Le ruban de renfort est enroulé autour de la nappe d'armures la plus externe, avantageusement comme indiqué dans la Norme API 17J, 4ème édition Mai 2014.

La nature, le nombre, le dimensionnement et l'organisation des couches constituant les conduites flexibles sont essentiellement liés à leurs conditions d'utilisation et d'installation. Les conduites peuvent comprendre des couches supplémentaires à celles susmentionnées.

La couche anti-usure peut être adjacente aux deux couches de renforcement entre lesquelles elle est localisée. Dans ce cas, la couche anti-usure est la seule couche entre les deux couches de renforcement.

En alternative, il peut y avoir une ou plusieurs autre(s) couche(s) entre les deux couches de renforcement. Par exemple, il peut y avoir, en plus de la couche anti-usure, une couche de maintien entre les deux couches de renforcement. La couche de maintien est en contact soit avec la face interne de la couche anti-usure, soit avec sa face externe.

Lorsque la conduite comprend plusieurs couches anti-usure, les deux couches anti-usure peuvent être identiques ou différentes (par exemple il peut s'agir de deux polypropylènes homopolymères distincts dans chaque couche anti-usure, ou bien les dimensions des bandes sont identiques ou différentes).

La conduite flexible est généralement tubulaire.

Avantageusement, la conduite flexible est de type non lié ("unbonded" en anglais), c'est-à-dire que ses couches de renforcement, telles que la(les) nappe(s) d'armures de traction et/ou la voûte de pression, sont non liées à la(aux) couche(s) polymérique(s) adjacente(s), telles que la(les) couche(s) anti-usure et/ou la gaine polymérique interne d'étanchéité et/ou la gaine polymérique externe d'étanchéité et/ou la gaine antiflamblement et/ou toute couche polymérique tubulaire composant la conduite flexible.

De préférence, la conduite flexible est de type non lié telle que décrite dans les API 17J (2014) et/ou API RP 17B (2014).

Typiquement, la conduite comprend (voire est constituée de) de l'intérieur vers l'extérieur :
- éventuellement une carcasse métallique,
- une gaine polymérique interne d'étanchéité,
- éventuellement une voûte de pression en tant que couche de renforcement,
- une nappe d'armures de traction interne en tant que couche de renforcement,
- une nappe d'armures de traction externe en tant que couche de renforcement,
- éventuellement un ruban de renfort en tant que couche de renforcement,
- une gaine polymérique externe d'étanchéité,
la conduite comprenant au moins une couche anti-usure telle que définie ci-dessus entre deux couches de renforcement, c'est-à-dire qu'elle comprend une couche anti-usure telle que définie ci-dessus :
- entre la nappe d'armures de traction interne et la nappe d'armures de traction externe, et/ou
- entre la voûte de pression et la nappe d'armures de traction interne (étant entendu que la voûte de pression est alors présente),
   et/ou,
- entre la nappe d'armures de traction externe et le ruban de renfort (étant entendu que le ruban de renfort est alors présent).

Dans un premier mode de réalisation de cette première alternative, les au moins deux couches de renforcement de la conduite comprennent au moins deux nappes d'armures de traction et la couche anti-usure est localisée entre deux nappes d'armures de traction successives. La conduite flexible comprend alors typiquement, (voire est constituée de), de l'intérieur vers l'extérieur de la conduite :
- éventuellement une carcasse métallique,
- une gaine polymérique interne d'étanchéité,
- éventuellement une voûte de pression en tant que couche de renforcement,
- une nappe d'armures de traction interne en tant que couche de renforcement,
- la couche anti-usure telle que définie ci-dessus,
- une nappe d'armures de traction externe en tant que couche de renforcement,
- éventuellement un ruban de renfort en tant que couche de renforcement, et
- une gaine polymérique externe d'étanchéité.

La conduite flexible peut comprendre une ou plusieurs couches anti-usure telle(s) que définie(s) ci-dessus supplémentaire(s), notamment entre la voûte de pression et la nappe d'armures de traction interne (étant entendu que la voûte de pression est alors présente) et/ou entre la nappe d'armures de traction externe et le ruban de renfort (étant entendu que le ruban de renfort est alors présent).

Dans un deuxième mode de réalisation de cette première alternative, les au moins deux couches de renforcement de la conduite comprennent au moins une nappe d'armures de traction et une voûte de pression et la couche anti-usure est localisée entre la nappe d'armures de traction (la plus interne lorsqu'il y a plusieurs nappes d'armures de traction) et la voûte de pression. La conduite flexible comprend alors typiquement (voire est constituée de), de l'intérieur vers l'extérieur de la conduite :
- éventuellement une carcasse métallique,
- une gaine polymérique interne d'étanchéité,
- une voûte de pression en tant que couche de renforcement,
- la couche anti-usure telle que définie ci-dessus,
- une, généralement deux, nappe(s) d'armures de traction en tant que couche(s) de renforcement,
- éventuellement un ruban de renfort en tant que couche de renforcement, et
- une gaine polymérique externe d'étanchéité.

La conduite flexible peut comprendre une ou plusieurs couches anti-usure telle(s) que définie(s) ci-dessus supplémentaire(s), notamment entre deux nappes d'armures de traction successives et/ou entre la nappe d'armures de traction (la plus externe lorsqu'il y en a plusieurs) et le ruban de renfort (étant entendu que le ruban de renfort est alors présent).

Dans un troisième mode de réalisation de cette première alternative, les au moins deux couches de renforcement de la conduite comprennent au moins une nappe d'armures de traction et un ruban de renfort et la couche anti-usure est localisée entre la nappe d'armures de traction (la plus externe lorsqu'il y a plusieurs nappes d'armures de traction) et le ruban de renfort.

La conduite flexible comprend alors typiquement (voire est constituée de), de l'intérieur vers l'extérieur de la conduite :
- éventuellement une carcasse métallique,
- la gaine polymérique interne d'étanchéité,
- éventuellement une voûte de pression en tant que couche de renforcement,
- une, généralement deux, nappe(s) d'armures de traction en tant que couche(s) de renforcement,
- une couche anti-usure telle que définie ci-dessus,
- un ruban de renfort en tant que couche de renforcement, et
- une gaine polymérique externe d'étanchéité.

La conduite flexible peut comprendre une ou plusieurs couches anti-usure telle(s) que définie(s) ci-dessus supplémentaire(s), notamment entre deux nappes d'armures de traction successives et/ou entre la voûte de pression et la nappe d'armures de traction (la plus interne lorsqu'il y en a plusieurs) (étant entendu que la voûte de pression est alors présente).

Dans une deuxième alternative, la conduite flexible est une conduite flexible dite « hybride ». Elle comprend (voire est constituée de), de l'intérieur vers l'extérieur :
- une gaine interne tubulaire,
- une structure composite de renfort en tant que couche de renforcement, la structure composite de renfort étant liée à la gaine interne tubulaire, la structure composite de renfort comprenant un enroulement d'au moins une couche de renfort laminées, chaque couche de renfort ayant une matrice thermoplastique renforcée avec des fibres,
- au moins une couche d'étanchéité en un matériau thermoplastique autour de la structure composite de renfort,
- une nappe d'armures de traction interne en tant que couche de renforcement, la nappe d'armures de traction interne étant non liée à la couche d'étanchéité,
- une nappe d'armures de traction externe en tant que couche de renforcement,
- éventuellement un ruban de renfort en tant que couche de renforcement, et
- éventuellement une gaine polymérique externe d'étanchéité,
la conduite comprenant au moins une couche anti-usure telle que définie ci-dessus entre deux couches de renforcement, c'est-à-dire qu'elle comprend une couche anti-usure telle que définie ci-dessus :
- entre la structure composite de renfort et la nappe d'armures de traction interne (la couche d'usure entourant généralement la couche d'étanchéité), et/ou
- entre la nappe d'armures de traction interne et la nappe d'armures de traction externe, et/ou
- entre la nappe d'armures de traction externe et le ruban de renfort (étant entendu que le ruban de renfort est alors présent).

La gaine interne tubulaire est destinée à confiner, généralement de manière étanche, le fluide transporté. Elle a aussi pour fonction de protéger la structure composite de renfort contre l'abrasion liée à la présence de particules abrasives, par exemple du sable, au sein du fluide transporté.

La gaine interne tubulaire est formée en matériau polymère, de préférence thermoplastique. Par exemple, le polymère formant la gaine interne tubulaire est choisi parmi une polyoléfine telle que du polyéthylène, un polyamide tel que du PA11 ou du PA12, ou un polymère fluoré tel que du polyfluorure de vinylidène (PVDF) ou encore les copolymères de polyfluorure de vinylidène et de polyhexafluoropropylène (PVDF-HFP), le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone), le PAS (polyarylsulfone), le PPE (polyphénylèneéther), le PPS (polysulfure de phénylène), les LCP (polymères à cristaux liquides), le PPA (polyphtalamide), les copolymères de ceux-ci, et/ou leurs mélanges ou encore un mélange d'un ou de plusieurs de ceux-ci avec un polysiloxane, le PTFE (polytétrafluoroéthylène) ou le PFPE (perfluoropolyéther).

La gaine interne tubulaire est formée d'un tube en matériau polymère, d'une bande en matériau polymère assemblé, ou d'un mat de polymère imprégné.

Lorsque la gaine interne tubulaire est formée d'un tube, elle est avantageusement obtenue par extrusion d'un tube thermoplastique choisi notamment parmi les polymères mentionnés ci-dessus.

Lorsque la gaine interne tubulaire est formée d'une bande en matériau polymère assemblé, elle est réalisée avantageusement par extrusion et enroulement de bandes thermoplastiques d'un polymère tel que décrit plus haut. De préférence, les spires d'une première couche sont jointives (bord à bord sans recouvrement) et les spires d'une couche supérieure sont disposées de façon à avoir un recouvrement de deux bandes adjacentes inférieures assurant l'étanchéité de la gaine interne tubulaire.

L'épaisseur de la gaine interne tubulaire est par exemple comprise entre 1 mm et 20 mm.

La structure composite de renfort comporte au moins une, de préférence une pluralité de couches de renfort laminées, et éventuellement, une couche anti-délamination interposée entre au moins deux couches de renfort.

Chaque couche de renfort laminée comporte une superposition de couches composites de renfort.

Chaque couche de renfort comporte une matrice en polymère et des fibres de renfort noyées dans la matrice en polymère.

Le polymère de la matrice est de préférence thermoplastique. Par exemple, le polymère formant la matrice est choisi parmi une polyoléfine telle que du polyéthylène, un polyamide tel que du PA11 ou du PA12, un polymère fluoré tel que du polyfluorure de vinylidène (PVDF), les copolymères polyfluorure de vinylidène et de polyhexafluoropropylène (PVDF-HFP), le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide), les copolymères de ceux-ci et/ou leurs mélanges ou encore un mélange d'un ou de plusieurs de ceux-ci avec un polysiloxane, le PTFE (polytétrafluoroéthylène) ou le PFPE (perfluoropolyéther).

Les fibres de renfort sont par exemple des fibres de carbone, des fibres de verre, des fibres d'aramide, ou/et des fibres de basalte.

Les fibres de renfort sont par exemple agencées, pour chacune des couches de renfort, de manière unidirectionnelle dans la matrice. Elles sont alors parallèles les unes aux autres. En variante, les fibres de renfort sont croisées suivant deux directions orthogonales, ou encore sont disposées de manière aléatoire dans la matrice.

La longueur des fibres de renfort dans chaque couche de renfort est supérieure à 100 m, et est notamment comprise entre 100 m et 4500 m.

Le diamètre des fibres composites est par exemple inférieur à 100 microns, et est notamment compris entre 4 microns et 10 microns.

De préférence, chaque couche de renfort est formée d'un enroulement d'au moins une bande composite présentant plusieurs couches de fibres noyées dans une matrice allongée, de longueur supérieure à au moins 10 fois sa largeur et à au moins 10 fois son épaisseur.

Par exemple, la longueur de chaque bande composite est supérieure à 100 m et est comprise entre 100 m et 4500 m. La largeur de chaque bande composite est comprise entre 6 mm et 50 mm. L'épaisseur de chaque bande composite est comprise entre 0,1 mm et 1 mm.

Lors de la réalisation de chaque couche de renfort, la ou chaque bande composite est enroulée en hélice autour de la gaine interne tubulaire, et est chauffée pour provoquer la fusion partielle de la matrice, et la liaison avec les spires successives de la bande composite, et/ou avec les couches adjacentes qui peuvent être d'autres couches de renfort, des couches anti-délamination ou la gaine interne tubulaire.

La valeur absolue de l'angle d'hélice d'enroulement β de chaque bande composite par rapport à l'axe de la conduite est par exemple comprise entre 55° et 85°. Ceci assure une élongation du composite sous l'effet de la pression interne, et une coopération adéquate avec les nappes d'armures.

L'épaisseur de chaque couche de renfort est généralement comprise entre 0,10 mm et 10 mm, par exemple entre 0,12 mm et 7 mm, ou entre 0,22 mm et 5 mm.

La couche d'étanchéité est destinée à confiner de manière étanche la structure composite de renfort. En particulier, et en cas d'infiltration d'eau à l'intérieur de la conduite flexible, entre la gaine polymérique externe et la couche d'étanchéité, la couche a pour fonction de limiter, de préférence d'empêcher, le contact entre l'eau infiltrée et la structure composite de renfort.

La couche d'étanchéité comprend de préférence un polymère thermoplastique. Par exemple, le polymère formant la couche d'étanchéité est choisi parmi une polyoléfine, éventuellement réticulée, telle que du polyéthylène ou du polypropylène ; un élastomère thermoplastique (TPE) tel que le polyuréthane thermoplastique (TPE-U ou TPU) ou les copolymères styréniques (TPE-S ou TPS) ou les copolymères de polypropylène et d'éthylène-propylène-diène (PP-EPDM) vulcanisés (TPE-V ou TPV); un polyamide tel que du PA11 ou du PA12 ; ou un polymère fluoré tel que du polyfluorure de vinylidène (PVDF) ou encore les copolymères de polyfluorure de vinylidène et de polyhexafluoropropylène (PVDF-HFP), ou elle comprend un polymère choisi parmi le PEK (polyéthercétone), le PEEK (polyétheréthercétone), le PEEKK (polyétheréthercétonecétone), le PEKK (polyéthercétonecétone), le PEKEKK (polyéthercétoneéthercétonecétone), le PAI (polyamide-imide), le PEI (polyéther-imide), le PSU (polysulfone), le PPSU (polyphénylsulfone), le PES (polyéthersulfone) , le PAS (polyarylsulfone), le PPE (polyphénylèneéther), le PPS (polysulfure de phénylène) les LCP (polymères à cristaux liquides), le PPA (polyphtalamide) et/ou leurs mélanges ou encore un mélange d'un ou de plusieurs de ceux-ci avec un polysiloxane, le PTFE (polytétrafluoroéthylène) ou le PFPE (perfluoropolyéther).

La couche d'étanchéité peut être formée d'un seul tenant d'une gaine tubulaire en matériau polymère, typiquement par extrusion d'un matériau thermoplastique autour de la structure composite de renfort. En variante, la couche d'étanchéité est réalisée à partir d'une structure discontinue, par exemple d'une bande en matériau polymère assemblé. Elle est alors typiquement réalisée par enroulement de bandes thermoplastiques d'un polymère thermoplastique, suivi d'une étape de soudage des bandes thermoplastiques. De préférence, les spires d'une première couche sont jointives (bord à bord sans recouvrement) et les spires d'une couche supérieure sont disposées de façon à avoir un recouvrement de deux bandes adjacentes, inférieures assurant l'étanchéité de la couche d'étanchéité.

La couche d'étanchéité peut être liée ou non-liée à la structure composite de renfort.

Les modes de réalisation décrits ci-dessus pour la(les) nappe(s) d'armures de traction de la conduite selon la première alternative sont applicables pour les nappes d'armures de traction de la conduite selon la deuxième alternative.

Les modes de réalisation décrits ci-dessus pour le ruban de renfort de la conduite selon la première alternative sont applicables pour le ruban de renfort de la conduite selon la deuxième alternative.

Les modes de réalisation décrits ci-dessus pour la gaine polymérique externe d'étanchéité de la conduite selon la première alternative sont applicables pour la gaine polymérique externe d'étanchéité de la conduite selon la deuxième alternative.

La couche anti-usure peut être adjacente aux deux couches de renforcement entre lesquelles elle est localisée. Dans ce cas, la couche anti-usure est la seule couche entre les deux couches de renforcement.

En alternative, il peut y avoir une ou plusieurs autre(s) couche(s) entre les deux couches de renforcement. Par exemple, il peut y avoir, en plus de la couche anti-usure, une couche de maintien entre les deux couches de renforcement. La couche de maintien est en contact soit avec la face interne de la couche anti-usure, soit avec sa face externe.

Dans un premier mode de réalisation de cette deuxième alternative, les au moins deux couches de renforcement de la conduite comprennent au moins deux nappes d'armures de traction et la couche anti-usure est localisée entre deux nappes d'armures de traction successives. La conduite flexible comprend alors typiquement, (voire est constituée de), de l'intérieur vers l'extérieur de la conduite :
- une gaine interne tubulaire,
- une structure composite de renfort en tant que couche de renforcement, la structure composite de renfort étant liée à la gaine interne tubulaire, la structure composite de renfort comprenant un enroulement d'au moins une couche de renfort laminées, chaque couche de renfort ayant une matrice thermoplastique renforcée avec des fibres,
- au moins une couche d'étanchéité en un matériau thermoplastique autour de la structure composite de renfort,
- une nappe d'armures de traction interne en tant que couche de renforcement, la nappe d'armures de traction interne étant non liée à la couche d'étanchéité,
- une couche anti-usure telle que définie ci-dessus,
- une nappe d'armures de traction externe en tant que couche de renforcement,
- éventuellement un ruban de renfort en tant que couche de renforcement, et
- éventuellement une gaine polymérique externe d'étanchéité,

La conduite flexible peut comprendre une couche anti-usure telle que définie ci-dessus supplémentaire, notamment entre la structure composite de renfort et la nappe d'armures de traction interne et/ou entre la nappe d'armures de traction externe et le ruban de renfort (étant entendu que le ruban de renfort est alors présent).

Dans un deuxième mode de réalisation de cette deuxième alternative, les au moins deux couches de renforcement de la conduite comprennent au moins une nappe d'armures de traction et un ruban de renfort et la couche anti-usure est localisée entre la nappe d'armures de traction (la plus externe lorsqu'il y a plusieurs nappes d'armures de traction) et le ruban de renfort.

La conduite flexible comprend alors typiquement (voire est constituée de), de l'intérieur vers l'extérieur de la conduite :
- une gaine interne tubulaire,
- une structure composite de renfort en tant que couche de renforcement, la structure composite de renfort étant liée à la gaine interne tubulaire, la structure composite de renfort comprenant un enroulement d'au moins une couche de renfort laminées, chaque couche de renfort ayant une matrice thermoplastique renforcée avec des fibres,
- au moins une couche d'étanchéité en un matériau thermoplastique autour de la structure composite de renfort,
- une nappe d'armures de traction interne en tant que couche de renforcement, la nappe d'armures de traction interne étant non liée à la couche d'étanchéité,
- une nappe d'armures de traction externe en tant que couche de renforcement,
- une couche anti-usure telle que définie ci-dessus,
- un ruban de renfort en tant que couche de renforcement, et
- éventuellement une gaine polymérique externe d'étanchéité,

La conduite flexible peut comprendre une couche anti-usure telle que définie ci-dessus supplémentaire, notamment entre la structure composite de renfort et la nappe d'armures de traction interne et/ou entre deux nappes d'armures de traction successives.

Dans un troisième mode de réalisation de cette deuxième alternative, les au moins deux couches de renforcement de la conduite comprennent une structure composite de renfort et au moins une nappe d'armures de traction et la couche anti-usure est localisée entre la structure de renfort et la nappe d'armures de traction (la plus interne lorsqu'il y a plusieurs nappes d'armures de traction).

La conduite flexible comprend alors typiquement (voire est constituée de), de l'intérieur vers l'extérieur de la conduite :
- une gaine interne tubulaire,
- une structure composite de renfort en tant que couche de renforcement, la structure composite de renfort étant liée à la gaine interne tubulaire, la structure composite de renfort comprenant un enroulement d'au moins une couche de renfort laminées, chaque couche de renfort ayant une matrice thermoplastique renforcée avec des fibres,
- au moins une couche d'étanchéité en un matériau thermoplastique autour de la structure composite de renfort,
- une couche anti-usure telle que définie ci-dessus
- une nappe d'armures de traction interne en tant que couche de renforcement, la nappe d'armures de traction interne étant non liée à la couche d'étanchéité,
- une nappe d'armures de traction externe en tant que couche de renforcement,
- éventuellement un ruban de renfort en tant que couche de renforcement, et
- éventuellement une gaine polymérique externe d'étanchéité,

La conduite flexible peut comprendre une couche anti-usure telle que définie ci-dessus supplémentaire, notamment entre deux nappes d'armures de traction successives et/ou entre la nappe d'armures de traction externe et le ruban de renfort (étant entendu que le ruban de renfort est alors présent).

Selon un second objet, l'invention concerne un procédé de préparation d'une conduite flexible sous-marine pour le transport de fluide, de préférence d'hydrocarbures, notamment telle que définie ci-dessus, comprenant l'enroulement hélicoïdalement en séquence d'au moins deux éléments longitudinaux métalliques ou en matériau composite pour former au moins deux couches de renforcement, au moins une bande en matériau polymérique étant enroulée hélicoïdalement entre lesdites couches de renforcement pour former une couche anti-usure, le matériau polymérique comprenant un polypropylène homopolymère ayant :
- un module de flexion mesuré à 23°C selon la norme ISO 178 de 2019 supérieur à 1500 MPa, et
- un indice de fluidité mesuré selon ISO 1133 révisée en 2011 à 230°C sous une masse de 2,16 kg inférieur ou égal à 4,0 g/10 minutes.

Les modes de réalisation définis ci-dessus pour la conduite flexible sont bien sûr applicables pour le procédé. De préférence, la conduite flexible préparée par le procédé est celle définie ci-dessus.

Le procédé peut comprendre une étape préalable ou simultanée de préparation de la au moins une bande par extrusion. Le polypropylène homopolymère défini ci-dessus a en effet l'avantage de s'extruder facilement. Généralement, le polypropylène homopolymère (ou le mélange de ceux-ci) est extrudé sous forme de feuilles de faible épaisseur et de grande longueur, puis celles-ci sont fendues pour obtenir les bandes de largeur souhaitée (de 30 à 200 mm, de préférence de 40 à 150 mm, typiquement 40, 75,100 ou 126 mm). En alternative, le polypropylène homopolymère (ou le mélange de ceux-ci) est extrudé directement sous forme de bande ayant la largeur souhaitée. Les bandes sont alors conditionnées pour les installer sur un dispositif de production de la conduite.

Les bandes peuvent être aboutées, typiquement par soudure, notamment par ultrasons, par laser, ou par recouvrement puis chauffage, par exemple au contact de plateau chauffant jusqu'à fusion, ou par collage (avec une colle, un scotch ou un adhésif).

Selon un troisième objet, l'invention a pour objet une conduite sous-marine susceptible d'être obtenue par le procédé précité.

Selon un quatrième objet, l'invention a pour objet l'utilisation de la conduite sous-marine précitée pour le transport de fluide, de préférence d'hydrocarbures.

La conduite flexible peut être utilisée à grande profondeur, typiquement jusqu'à 3000 mètres de profondeur. Elle permet le transport de fluides, de préférence d'hydrocarbures, ayant une température supérieure à 90°C, atteignant typiquement 130°C et pouvant même dépasser les 150°C et/ou une pression interne supérieure à 100 bars, pouvant atteindre 1000 bars, voire 1500 bars.

L'utilisation d'un polypropylène homopolymère (ou d'un mélange de polypropylènes homopolymères), où ledit polypropylène homopolymère (ou ledit mélange) a :
- un module de flexion mesuré à 23°C selon la norme ISO 178 de 2019 supérieur à 1500 MPa, et
- un indice de fluidité mesuré selon ISO 1133 révisée en 2011 à 230°C sous une masse de 2,16 kg inférieur ou égal à 4,0 g/10 minutes,
comme matériau polymérique d'une bande enroulée de façon hélicoïdale pour former une couche anti-usure localisée entre au moins deux couches de renforcement d'une conduite sous-marine destinée au transport de fluides, de préférence d'hydrocarbures, chacune desdites couches de renforcement étant réalisée par enroulement hélicoïdal d'un élément longitudinal métallique ou en matériau composite, afin d'améliorer la résistance au fluage de ladite couche anti-usure est décrite.

L'invention concerne également une méthode d'amélioration de la résistance au fluage d'une couche anti-usure en matériau polymérique qui sépare au moins deux couches de renforcement d'une conduite flexible sous-marine pour le transport de fluides, de préférence d'hydrocarbures, chacune desdites couches de renforcement (12,16,20) étant réalisée par enroulement hélicoïdal d'un élément longitudinal métallique ou en matériau composite, ladite couche anti-usure étant réalisée par enroulement hélicoïdal d'au moins une bande dudit matériau polymérique, la méthode comprenant l'utilisation d'un polypropylène homopolymère tel que défini ci-dessus au sein dudit matériau polymérique.

Cette amélioration de la résistance au fluage se traduit par une faible perte d'épaisseur de la couche anti-usure, de préférence de moins de 60%, notamment de moins de 50%, en particulier de moins de 40%, après 20 ans d'utilisation de la conduite flexible à une température de 90°C et une pression de 200 bars, ou bien à une température de 70°C et une pression de 300 bars.

Les modes de réalisations décrits ci-dessus sont bien sûr applicables.

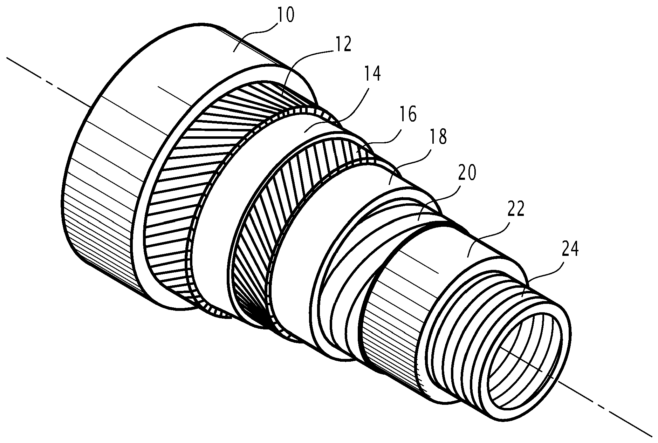

D'autres particularités et avantages de l'invention ressortiront à la lecture de la description faite ci-après de modes de réalisation particuliers de l'invention, donnés à titre indicatif mais non limitatif, en référence à la figure 1.

[Fig 1] La figure 1 est une vue schématique partielle en perspective d'une conduite flexible selon la première alternative de l'invention. Elle illustre une conduite conforme à l'invention comprenant (voire constituée de), de l'extérieur vers l'intérieur :
- une gaine polymérique externe d'étanchéité 10,
- une nappe externe d'armures de traction 12 réalisée par enroulement hélicoïdal selon un pas long d'un élément longitudinal métallique ou en matériau composite,
- une première couche anti-usure 14 réalisée par enroulement hélicoïdal d'au moins une bande d'un matériau polymérique comprenant un polypropylène homopolymère tel que défini ci-dessus,
- une nappe interne d'armures de traction 16 réalisée par enroulement hélicoïdal selon un pas long d'un élément longitudinal métallique ou en matériau composite (en sens opposé de l'enroulement hélicoïdal de l'élément longitudinal de la nappe externe d'armures de traction 12),
- une deuxième couche anti-usure 18 réalisée par enroulement hélicoïdal d'au moins une bande d'un matériau polymérique comprenant un polypropylène homopolymère tel que défini ci-dessus,
- une voûte de pression 20 réalisée par enroulement hélicoïdal selon un pas court d'un élément longitudinal,
- une gaine polymérique interne d'étanchéité 22, et
- une carcasse interne 24 de reprise des efforts radiaux d'écrasement.

La conduite représentée présente un premier enroulement hélicoïdal d'une bande d'un matériau polymérique comprenant un polypropylène homopolymère tel que défini ci-dessus pour former une première couche anti-usure 14 entre les deux nappes d'armures de traction 12, 16 et un second enroulement hélicoïdal d'une bande de matériau polymérique comprenant un polypropylène homopolymère tel que défini ci-dessus pour former une deuxième couche anti-usure 18 entre la voûte de pression 20 et la nappe interne d'armures de traction 16.

Grâce à ces deux couches anti-usure, les nappes d'armures de traction 12, 16 et la voûte de pression 20 ne sont pas en contact les unes avec les autres, de sorte que, lors du fléchissement de la conduite flexible, il n'y a pas d'usure due aux frottements des couches de renforcement les unes contre les autres.

Du fait de la présence de la carcasse interne 24, cette conduite est dite à passage non lisse (" rough bore " en langue anglaise). L'invention pourrait aussi s'appliquer à une conduite dite à passage lisse (" smooth-bore " en langue anglaise), ne comportant pas de carcasse interne.

L'invention pourrait s'appliquer à une conduite ne comprenant pas la première couche anti-usure 14 (la conduite comprend alors nécessairement la couche anti-usure 18). Elle pourrait également s'appliquer à une conduite ne comprenant pas la deuxième couche anti-usure 18 (la conduite comprend alors nécessairement la première couche anti-usure 14).

De même, on ne sortirait pas du champ de la présente invention en supprimant la voûte de pression 20 et la couche anti-usure 18.

Sur la figure 1, seules deux nappes d'armures de traction 12 et 16 sont représentées, mais la conduite pourrait aussi comporter une ou plusieurs paires supplémentaires d'armures de traction. La couche anti-usure peut alors être présente entre deux nappes d'armures successives. Il peut également y avoir une couche anti-usure entre chacune des nappes d'armures. Par exemple, s'il y a quatre nappes d'armures, la conduite peut comprendre, de l'extérieur vers l'intérieur, une nappe d'armures la plus externe, une première couche anti-usure telle que définie ci-dessus, une nappe d'armures intermédiaire externe, une deuxième couche anti-usure telle que définie ci-dessus, une nappe d'armures intermédiaire interne, une troisième couche anti-usure telle que définie ci-dessus, une nappe d'armures la plus interne, les première, deuxième et troisième couches anti-usure étant identiques entre elles ou différentes.

La conduite flexible peut également comprendre des couches non représentées sur la figure 1, telle qu'une couche de maintien, par exemple entre la gaine polymérique externe 10 et la nappe d'armures de traction externe 12, ou bien entre deux nappes d'armures de traction 12 et 16, ou bien en contact soit avec la face interne de la couche anti-usure 14, soit avec sa face externe.

### Exemple

### Exemple 1 : Préparation de feuilles de polymères par extrusion

Des échantillons de polymères ont été extrudés à une vitesse de 3,3 à 3,9 m/min sous forme de bandes de largeur de l'ordre de 100 mm, d'épaisseur de l'ordre de 1,5 mm et de longueur d'au moins 20 mètres.

### [Table 1]

**Tableau 1 : Caractéristiques des polymères extrudés sous forme de bande.**

| | Polymèr e | Fournis seur | Grade | MFI (g/10 min) 230°C/ 2,16 kg | Modul e d'élast icité (MPa) | Mod ule de flexi on à 23° C (MP a) (ISO 178) | tempér ature de fusion ISO 11357-3) (°C) | Taux de cristall inité (1^{re} chauff e) | Taux de cristall inité 2^{nde} chauff e) |
|---|---|---|---|---|---|---|---|---|---|
| Co mp. | Copolym ère de propylèn e | Total | PPC 1645 | 0,3 | 1800 selon ISO 527-2 ; 1819 selon ASTM D 638 type IV | - | 228 | 57 | 64 |
| Co mp. | Copolym ère de propylèn e | INEOS | Eltex Tub 350-HM00 | 0,3 | 1520 selon ASTM D 638 type IV | 185 0 | 227 | 55 | 63 |
| Inv. | Polyprop ylène homopol ymère | Repsol | PP040 C1E | 3 | 1935 selon ASTM D 638 type IV | 180 0 | 227 | 64 | 71 |
| Inv. | Polyprop ylène homopol ymère | Total | PPH4 022 | 3 | 1800 selon ISO 527-2 ; 1939 selon ASTM D 638 type IV | 170 0 | 226 | 56 | 67 |
| Inv. | Polyprop ylène homopol ymère | Polychi m | HL10X F | 3,9 | 1666 selon ASTM D 638 type IV | 180 0 | 236 | 55 | 61 |
| Co mp. | Polyprop ylène homopol ymère | SABIC | 520P | 10 | 1800 selon ASTM D 638 type IV | - | 200 | ND | ND |

| | | | | | | | | | |
|---|---|---|---|---|---|---|---|---|---|
| Comp. : comparatif - Inv. : Polypropylène homopolymère tel que défini dans l'invention *taux calculé en divisant la chaleur de fusion du polymère obtenue par DSC avec une chauffe jusqu'à 200°C à 20°C/min par la chaleur de fusion d'un polypropylène homopolymère à 100% cristallin estimée à 207 joules/grammes (documentation Perkin Elmer) | | | | | | | | | |

A cause de son indice de fluidité élevé (10 g/10 min), l'extrusion du polypropylène homopolymère SABIC a conduit à une bande d'épaisseur et de largeur peu homogènes.

### Exemple 2 : Tests de résistance au fluage

Les essais de fluage ont consisté à placer un disque du matériau polymère (60 mm de diamètre et de même épaisseur que la bande utilisée sur conduite flexible : 0,8 mm ,1,5 mm, 2.5 mm...) entre deux pièces d'aciers, elles aussi circulaires de même diamètre que la bande, et usinées pour reproduire sur la face en contact avec la bande les dimensions et jeux (déjoints) des fils de voûtes de pression et de nappes d'armures. Par exemple, pour simuler une interface nappe d'armures / nappe d'armures avec des fils de 14 mm (largeur) * 6 mm (hauteur), le jeu est de 0,7 mm. Pour simuler une interface nappe d'armures / voûte de pression, on a utilisé un jeu de 3,5 mm d'un côté et 0,7 mm de l'autre.

L'ensemble pièce d'acier / disque en matériau polymère / pièce d'acier a été placé sous pression et température et la perte d'épaisseur de la bande est mesurée. L'essai a duré entre quelques heures et plusieurs mois, le but étant d'observer la stabilisation du « taux de fluage» (à savoir la pente de la perte d'épaisseur du disque en matériau polymère en fonction du temps).

Les résultats de perte d'épaisseur après 200 heures de tests sont fournis au tableau 2 et correspondent à une configuration avec un jeu de 3,5 mm d'un côté et 0,7 mm de l'autre (ce qui simule une interface nappe d'armures / voûte de pression). La quasi-totalité de la perte d'épaisseur d'une couche anti-usure ayant lieu au tout début de la mise en service de la conduite flexible, 200 heures de tests sont suffisantes pour évaluer la résistance au fluage.

### [Table 2]

**Tableau 2 : Pertes d'épaisseur après 200 heures de test à 90°C et 200 bar en fonction du polymère testé.**

| Perte d'épaisseur après 200 heures | PP copolymère (Total PPC1645) (comparatif) | PVDF (CoflonXD) (comparatif) | PP homopolymère (Repsol PP040C1E) (invention) |
|---|---|---|---|
| 90°C / 200 bar | 80,3% | 91,2% | 49,6% |

Ces résultats montrent que la perte d'épaisseur est bien moindre pour l'homopolymère de polypropylène ayant un module de flexion et un indice de fluidité tels que requis. La perte d'épaisseur avec le PP copolymère est 62% plus importante que celle observée avec le PP homopolymère et, et la perte d'épaisseur avec le PVDF est 84% fois plus importante que celle observée avec le PP homopolymère.

## Revendications

1. Conduite flexible sous-marine pour le transport de fluide comprenant au moins deux couches de renforcement (12,16,20) séparées par une couche anti-usure (14,18) en matériau polymérique, chacune desdites couches de renforcement (12,16,20) étant réalisée par enroulement hélicoïdal d'un élément longitudinal métallique ou en matériau composite, ladite couche anti-usure (14,18) étant réalisée par enroulement hélicoïdal d'au moins une bande dudit matériau polymérique, le matériau polymérique comprenant au moins 50% en poids d'un polypropylène homopolymère ou d'un mélange de polypropylènes homopolymères, chaque polypropylène homopolymère ayant :
- un module de flexion mesuré à 23°C selon la norme ISO 178 de 2019 supérieur à 1500 MPa, et
- un indice de fluidité mesuré selon ISO 1133 révisée en 2011 à 230°C sous une masse de 2,16 kg inférieur ou égal à 4,0 g/10 minutes.

2. Conduite flexible selon la revendication 1, dans laquelle le polypropylène homopolymère a un module de flexion mesuré à 23°C selon la norme ISO 178 de 2019 supérieur ou égal à 1550 MPa, de préférence supérieur ou égal à 1600 MPa, de manière particulièrement préférée supérieur ou égal à 1700 MPa.

3. Conduite flexible selon la revendication 1 ou 2, dans laquelle le polypropylène homopolymère a :
- une densité mesurée selon ISO 1183 de 2019 supérieure ou égale à 0,85 g/cm³, typiquement ou égale à 0,88 g/cm³, notamment ou égale à 0,905 g/cm³,
- une contrainte de traction au seuil mesurée à 23 ± 2 °C et avec une vitesse de déplacement de 50 mm/min selon ASTM D638 de 2014 ou ISO 527-2 de 2012 comprise entre 30 et 45 MPa,
- un allongement au seuil mesuré mesurée à 23 ± 2 °C selon ASTM D638 de 2014 ou ISO 527-2 de 2012 de 1 à 7%, de préférence de 3 à 5%,
- une température de fusion déterminée par calorimétrie à balayage différentiel selon ISO 11357-3 de 2018 au moins égale à 150°C, notamment au moins égale à 200°C, de préférence au moins égale à 220°C, et/ou
- un taux de cristallinité déterminé par calorimétrie à balayage différentiel d'au moins 40%, typiquement d'au moins 50%.

4. Conduite flexible selon l'une quelconque des revendications 1 à 3, dans laquelle la bande comprend moins de 0,4%, notamment moins de 0,1%, voire même est exempte, de plastomère formé à partir d'un propylène et d'au moins un comonomère autre que le propylène.

5. Conduite flexible selon l'une quelconque des revendications 1 à 4, dans laquelle la bande comprend, voire est constituée de :
- 80 à 100% en poids de polypropylène homopolymère tel que défini à l'une quelconque des revendications 1 à 3,
- 0 à 5% en poids de plastifiant,
- 0 à 5% en poids de modifiant choc,
- 0 à 10% en poids d'additifs, notamment choisis parmi les antioxydants, anti-UV, charges de renfort, adjuvants de fabrication, stabilisants à la chaleur, agents de nucléation et un mélange de ceux-ci.

6. Conduite flexible selon l'une quelconque des revendications 1 à 5, qui comprend, de l'intérieur vers l'extérieur :
- éventuellement une carcasse métallique (24),
- une gaine polymérique interne d'étanchéité (22),
- éventuellement une voûte de pression (20),
- une nappe d'armures de traction interne (16),
- une nappe d'armures de traction externe (12),
- éventuellement un ruban de renfort,
- une gaine polymérique externe d'étanchéité (10),
la conduite comprenant une couche anti-usure (14,18) telle que définie selon l'une quelconque des revendications 1 à 5 :
- entre la nappe d'armures de traction interne (16) et la nappe d'armures de traction externe (12) et/ou
- entre la voûte de pression (20) et la nappe d'armures de traction interne (16) étant entendu que la voûte de pression (20) est alors présente, et/ou
- entre la nappe d'armures de traction externe (12) et le ruban de renfort, étant entendu que le ruban de renfort est alors présent.

7. Conduite flexible selon la revendication 6, la conduite flexible étant de type non lié.

8. Conduite flexible selon l'une quelconque des revendications 1 à 5, qui comprend, de l'intérieur vers l'extérieur :
- une gaine interne tubulaire,
- une structure composite de renfort liée à la gaine interne tubulaire, la structure composite de renfort comprenant un enroulement d'au moins une couche de renfort laminées, chaque couche de renfort ayant une matrice thermoplastique renforcée avec des fibres,
- au moins une couche d'étanchéité en un matériau thermoplastique autour de la structure composite de renfort,
- une nappe d'armures de traction interne non liée à la couche d'étanchéité,
- une nappe d'armures de traction externe,
- éventuellement un ruban de renfort, et
- éventuellement une gaine polymérique externe d'étanchéité,
la conduite comprenant au moins une couche anti-usure telle que définie selon l'une quelconque des revendications 1 à 5 :
- entre la structure composite de renfort et la nappe d'armures de traction interne, et/ou
- entre la nappe d'armures de traction interne et la nappe d'armures de traction externe et/ou
- entre la nappe d'armures de traction externe et le ruban de renfort, étant entendu que le ruban de renfort est alors présent.

9. Procédé de préparation d'une conduite flexible sous-marine pour le transport de fluide selon l'une quelconque des revendications 1 à 8 comprenant l'enroulement hélicoïdalement en séquence d'au moins deux éléments longitudinaux métallique ou en matériau composite pour former au moins deux couches de renforcement (12,16,20), au moins une bande en matériau polymérique étant enroulée hélicoïdalement entre lesdites couches de renforcement (12,16,20) pour former une couche anti-usure (14,18), le matériau polymérique comprenant un polypropylène homopolymère ayant :
- un module de flexion mesuré à 23°C selon la norme ISO 178 de 2019 supérieur à 1500 MPa, et
- un indice de fluidité mesuré selon ISO 1133 révisée en 2011 à 230°C sous une masse de 2,16 kg inférieur ou égal à 4,0 g/10 minutes.

10. Utilisation de la conduite sous-marine selon l'une quelconque des revendications 1 à 8 ou obtenue selon le procédé selon la revendication 9 pour le transport de fluides, de préférence d'hydrocarbures.

## Patentansprüche

1. Flexible Unterwasserleitung für den Transport von Fluiden, umfassend mindestens zwei Verstärkungsschichten (12, 16, 20), die durch eine Verschleißschutzschicht (14, 18) aus polymerem Material getrennt sind, wobei jede der Verstärkungsschichten (12, 16, 20) durch spiralförmiges Wickeln eines Längselements aus Metall oder Verbundmaterial gefertigt ist, die Verschleißschutzschicht (14, 18) durch spiralförmiges Wickeln mindestens eines Streifens des Polymermaterials gefertigt ist, das Polymermaterial umfassend mindestens 50 Gewichts-% eines homopolymeren Polypropylens oder eines Gemischs aus homopolymeren Polypropylenen, wobei jedes homopolymere Polypropylen Folgendes aufweist:
- einen Biegemodul, gemessen bei 23 °C nach ISO 178 von 2019, größer als 1500 MPa, und
- einen Schmelzindex, gemessen nach ISO 1133 revidiert 2011 bei 230 °C unter einer Masse von 2,16 kg, weniger als oder gleich wie 4,0 g/10 Minuten.

2. Flexible Leitung nach Anspruch 1, wobei das homopolymere Polypropylen einen Biegemodul, gemessen bei 23 °C nach ISO 178 von 2019, größer als oder gleich wie 1550 MPa, vorzugsweise größer als oder gleich wie 1600 MPa und besonders bevorzugt größer als oder gleich wie 1700 MPa, aufweist.

3. Flexible Leitung nach Anspruch 1 oder 2, wobei das Polypropylen-Homopolymer Folgendes aufweist:
- eine Dichte, gemessen nach ISO 1183 von 2019, größer als oder gleich wie 0,85 g/cm³, normalerweise oder gleich wie 0,88 g/cm³, insbesondere oder gleich wie 0,905 g/cm³,
- eine Zugspannung an der Schwelle, gemessen bei 23 ± 2 °C und mit einer Verschiebegeschwindigkeit von 50 mm/min nach ASTM D638 von 2014 oder ISO 527-2 von 2012, zwischen 30 und 45 MPa,
- eine Dehnung an der Schwelle, gemessen bei 23 ±2 °C nach ASTM D638 von 2014 oder ISO 527-2 von 2012, von 1 bis 7 %, vorzugsweise 3 bis 5 %,
- eine Schmelztemperatur, bestimmt durch dynamische Differenzkalorimetrie nach ISO 11357-3 von 2018, von mindestens 150 °C, insbesondere mindestens 200 °C, vorzugsweise mindestens 220 °C, und/oder
- einen durch dynamische Differenzkalorimetrie bestimmten Kristallinitätsgrad von mindestens 40 %, normalerweise mindestens 50 %.

4. Flexible Leitung nach einem der Ansprüche 1 bis 3, wobei der Streifen weniger als 0,4 %, insbesondere weniger als 0,1 %, Plastomer umfasst oder sogar frei davon ist, das aus einem Propylen und mindestens einem anderen Comonomer als Propylen gebildet ist.

5. Flexible Leitung nach einem der Ansprüche 1 bis 4, wobei der Streifen Folgendes umfasst oder aus Folgendem besteht:
- 80 bis 100 Gewichts-% homopolymeres Polypropylen, wie definiert in einem der Ansprüche 1 bis 3,
- 0 bis 5 Gewichts-% Weichmacher,
- 0 bis 5 Gewichts-% Schlagzähmodifizierer,
- 0 bis 10 Gewichts-% Additive, insbesondere ausgewählt aus Antioxidantien, UV-Schutzmitteln, Verstärkungsfüllstoffen, Herstellungshilfsmitteln, Hitzestabilisatoren, Nukleierungsmitteln und einem Gemisch daraus.

6. Flexible Leitung nach einem der Ansprüche 1 bis 5, die von innen nach außen Folgendes umfasst:
- optional ein Metallgehäuse (24),
- eine innere polymerische Dichtungshülle (22),
- optional ein Druckgewölbe (20),
- eine innere Zugbewehrungslage (16),
- eine äußere Zugbewehrungslage (12),
- optional ein Verstärkungsband,
- eine äußere polymere Dichtungshülle (10),
die Leitung umfassend eine Verschleißschutzschicht (14,18) wie definiert in einem der Ansprüche 1 bis 5:
- zwischen der inneren Zugbewehrungslage (16) und der äußeren Zugbewehrungslage (12), und/oder
- zwischen dem Druckgewölbe (20) und der inneren Zugbewehrungslage (16) mit der Maßgabe, dass das Druckgewölbe (20) dann vorhanden ist, und/oder
- zwischen der äußeren Zugbewehrungslage (12) und dem Verstärkungsband, mit der Maßgabe, dass das Verstärkungsband dann vorhanden ist.

7. Flexible Leitung nach Anspruch 6, wobei die flexible Leitung von einem ungebundenen Typ ist.

8. Flexible Leitung nach einem der Ansprüche 1 bis 5, die von innen nach außen Folgendes umfasst:
- eine innere rohrförmige Hülle,
- eine mit der inneren rohrförmigen Hülle verbundene Verbundverstärkungsstruktur, die Verbundverstärkungsstruktur umfassend eine Wicklung aus mindestens einer laminierten Verstärkungsschicht, wobei jede dieser Verstärkungsschichten eine faserverstärkte thermoplastische Matrix aufweist,
- optional mindestens eine Dichtungsschicht (22) aus thermoplastischem Material um die Verstärkungsverbundstruktur (21) herum,
- eine innere Zugbewehrungslage, die nicht mit der Dichtungsschicht verbunden ist,
- eine äußere Zugbewehrungslage,
- optional ein Verstärkungsband, und
- optional eine äußere polymere Dichtungshülle,
die Leitung umfassend mindestens eine Verschleißschutzschicht wie definiert nach einem der Ansprüche 1 bis 5:
- zwischen der Verbundverstärkungsstruktur und der inneren Zugbewehrungslage, und/oder
- zwischen der inneren Zugbewehrungslage und der äußeren Zugbewehrungslage und/oder
- zwischen der äußeren Zugbewehrungslage und dem Verstärkungsband, vorausgesetzt, dass das Verstärkungsband dann vorhanden ist.

9. Verfahren zur Herstellung einer flexiblen Unterwasserleitung für den Transport von Fluiden nach einem der Ansprüche 1 bis 8, umfassend das aufeinanderfolgende schraubenförmige Wickeln von mindestens zwei Längselementen aus Metall oder Verbundmaterial, um mindestens zwei Verstärkungsschichten (12, 16, 20) zu bilden, wobei mindestens ein Streifen aus Polymermaterial schraubenförmig zwischen den Verstärkungsschichten (12, 16, 20) gewickelt wird, um eine Verschleißschutzschicht (14, 18) zu bilden, das Polymermaterial umfassend ein homopolymeres Polypropylen, das Folgendes aufweist:
- einen Biegemodul, gemessen bei 23 °C nach ISO 178 von 2019, größer als 1500 MPa, und
- einen Schmelzindex, gemessen nach ISO 1133 revidiert 2011 bei 230 °C unter einer Masse von 2,16 kg, weniger als oder gleich wie 4,0 g/10 Minuten.

10. Verwendung der Unterwasserleitung nach einem der Ansprüche 1 bis 8 oder nach dem in Anspruch 9 beschriebenen Verfahren zum Transportieren von Fluiden, vorzugsweise Kohlenwasserstoffen.

## Claims

1. A flexible underwater pipe for the transport of fluid comprising at least two reinforcement layers (12,16,20) separated by an anti-wear layer (14,18) of polymeric material, each of said reinforcement layers (12,16,20) being produced by helical winding of a longitudinal element of metal or of composite material, said anti-wear layer (14,18) being produced by helical winding of at least one strip of said polymeric material, the polymeric material comprising at least 50% by weight of a polypropylene homopolymer or of a mixture of polypropylene homopolymers, each polypropylene homopolymer having:
- a flexural modulus measured at 23°C, according to the 2019 ISO 178 standard, greater than 1500 MPa, and
- a melt flow index measured as per ISO 1133, revised in 2011, at 230°C under a weight of 2.16 kg less than or equal to 4.0 g/10 minutes.

2. The flexible pipe according to Claim 1, wherein the polypropylene homopolymer has a flexural modulus measured at 23°C, as per the 2019 ISO 178 standard, of greater than or equal to 1550 MPa, preferentially greater than or equal to 1600 MPa, particularly preferentially greater than or equal to 1700 MPa.

3. The flexible pipe according to claim 1 or 2 wherein the polypropylene homopolymer has:
- a density measured as per ISO 1183 of 2019 greater than or equal to 0.85 g/cm³, typically or equal to 0.88 g/cm³, in particular or equal to 0.905 g/cm³,
- a tensile stress at the threshold measured at 23 ± 2 °C and with a displacement speed of 50 mm/minute according to ASTM D638 of 2014 or ISO 527-2 of 2012 comprised between 30 and 45 MPa,
- an elongation at yield measured at 23 ± 2 °C as per ASTM D638 of 2014 or ISO 527-2 of 2012, of 1 to 7%, preferentially of 3 to 5%,
- a melting temperature determined by differential scanning calorimetry as per the 2018 ISO 11357-3 standard at least equal to 150°C, in particular at least equal to 200°C, preferentially at least equal to 220°C, and/or
- a degree of crystallinity determined by differential scanning calorimetry of at least 40%, typically at least 50%.

4. The flexible pipe according to any of claims 1 to 3, wherein the strip comprises less than 0.4%, in particular less than 0.1%, or is even free of plastomer formed from propylene and at least one comonomer other than propylene.

5. The flexible pipe according to according to any of claims 1 to 4, wherein the strip comprises, or even consists of:
- 80 to 100% by weight of polypropylene homopolymer such as defined according to any of claims 1 to 3,
- 0 to 5 % by weight of plasticizer,
- 0 to 5% by weight of impact modifier,
- 0 to 10% by weight of additives, in particular chosen from antioxidants, UV stabilizers, reinforcement fillers, manufacturing admixtures, heat stabilizers, nucleating agents and a mixture thereof.

6. The flexible pipe according to any of claims 1 to 5, which comprises from the inside to the outside:
- if appropriate, a metal carcass (24),
- an inner polymeric sealing sheath (22),
- if appropriate, a pressure vault (20),
- an inner tensile armor layer (16),
- an outer tensile armor layer (12),
- if appropriate, a reinforcement tape,
- an outer polymeric sealing sheath (10),
the pipe comprising an anti-wear layer (14.18) such as defined according to any of claims 1 to 5:
- between the inner tensile armor layer (16) and the outer tensile armor layer (12) and/or
- between the pressure vault (20) and the inner tensile armor layer (16) with the proviso that the pressure vault is then present, and/or
- between the outer tensile armor layer (12) and the reinforcement tape, with the proviso that the reinforcement tape is then present.

7. The flexible pipe according to claim 6, the flexible pipe being of the unbonded type.

8. The flexible pipe according to any of claims 1 to 5, which comprises from the inside to the outside:
- a tubular inner sheath,
- a composite reinforcement structure bonded to the tubular inner sheath, the composite reinforcement structure comprising a winding of at least one laminated reinforcement layer, each reinforcement layer having a fiber-reinforced thermoplastic matrix,
- at least one sealing layer of thermoplastic material applied around the composite reinforcement,
- an inner tensile armor layer unbonded to the sealing layer,
- an outer tensile armor layer,
- if appropriate, a reinforcement tape, and
- if appropriate, an outer polymeric sealing sheath,
the pipe comprising at least an anti-wear layer such as defined according to any of claims 1 to 5:
- between the composite reinforcement structure and the inner tensile armor layer, and/or
- between the inner tensile armor layer and the outer tensile armor layer and/or
- between the outer traction armor layer and the reinforcement tape, with the proviso that the reinforcement tape is then present.

9. A method of preparation of a flexible underwater pipe for the transport of fluid according to any one of claims 1 to 8, comprising the helical winding in sequence of at least two longitudinal elements of metal or of composite material, in order to form at least two reinforcement layers (12,16,20), at least one strip of polymeric material being helically wound between said reinforcement layers (12,16,20) in order to form an anti-wear layer (14,18), the polymeric material comprising a polypropylene homopolymer having:
- a flexural modulus measured at 23°C, according to the 2019 ISO 178 standard, greater than 1500 MPa, and
- a melt flow index measured as per ISO 1133, revised in 2011, at 230°C under a weight of 2.16 kg less than or equal to 4.0 g/10 minutes.

10. The use of the submarine pipeline according to one of claims 1 to 8 or obtained according to the method according to claim 9 for the transport of fluids, preferentially of hydrocarbons.
